(19) Europäisches Patentamt
European Patent Office
Office européen des brevets

(11) **EP 2 522 481 B1**

(12) **EUROPEAN PATENT SPECIFICATION**

(45) Date of publication and mention
of the grant of the patent:
**09.12.2015 Bulletin 2015/50**

(51) Int Cl.:
***B29C 45/76*** *(2006.01)* ***H02M 5/458*** *(2006.01)*

(21) Application number: **12003795.7**

(22) Date of filing: **14.05.2012**

(54) **Injection molding machine**

Spritzgießmaschine

Machine de moulage à injection

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.05.2011 JP 2011108686**

(43) Date of publication of application:
**14.11.2012 Bulletin 2012/46**

(73) Proprietor: **Sumitomo Heavy Industries, Ltd.
Tokyo 141-6025 (JP)**

(72) Inventors:
• **Tsunemi, Koki
Chiba-shi
Chiba 263-0001 (JP)**
• **Sugiura, Kosuke
Chiba-shi
Chiba 263-0001 (JP)**
• **Mizuno, Hiroyuki
Yokosuka-shi
Kanagawa, 237-8555 (JP)**

(74) Representative: **Klang, Alexander H.
Wagner & Geyer
Gewürzmühlstrasse 5
80538 München (DE)**

(56) References cited:
**EP-A2- 2 106 015      WO-A1-2011/162246
DE-A1- 10 152 198      JP-A- 2004 154 961
JP-A- 2010 110 936**

EP 2 522 481 B1

## Description

## TECHNICAL FIELD

The present invention is related to an injection molding machine which includes a converter configured to convert electric power from a power supply and supply the converted electric power to a motor via a DC link; and a control apparatus configured to control the converter for molding at a predetermined molding cycle.

## BACKGROUND ART

JP2006-54947 A discloses this kind of a converter. According to the configuration disclosed in JP2006-54947 A, the converter includes a single power converting part (a bridge circuit) which is comprised of power transistors and diodes which are connected to the corresponding transistors with inverse-parallel connections. The disclosed converter converts three-phase supplied power to DC electric power with full-wave rectification by the diodes at the time of a motor powering mode, while it drives the power transistors in synchronization with a phase of the three-phase supplied power to generate regenerative electric power to be charged in the power supply at the time of a motor regenerating mode. Further, at the time of the regenerating mode of the motor, the disclosed converter performs the regenerating operation when a voltage across the DC link exceeds a predetermined upper limit voltage.

With respect to an injection molding machine which performs molding at a predetermined molding cycle, a magnitude of energy obtained at the time of the regenerating mode of the motor differs according the respective processes in the molding cycle, etc. Further, the magnitude of energy required at the time of a motor powering mode also differs according the respective processes in the molding cycle, etc. Therefore, there may be a case in which energy required for a certain process is not accumulated in the DC link before the end of the preceding process.

In contrast to it, such a configuration may be contemplated in which the power transistors of the converter are always driven to supply electric power necessary for the motor based on the electric power from the power supply. However, such a configuration may lead to upsizing of the converter.

DE 101 52 198 A1 discloses an electric injection molding machine, which comprises a drivable cylinder with an inner rotatable worm, a closure unit and a removal unit. The machine components are coupled to an electric motor, which is connected to a rectifier module. The latter feeds a supply network. The rectifier module is a self guiding pulse current rectifier module, and has a semiconductor switch. The latter is an insulated gate bipolar transistor. The rectifier module and pulse current rectifier are located next to each other on an assembly plate.

EP 2 106 015 A2 discloses a power supply device for supplying an electric power to a servo amplifier which is configured by an AC/DC converter and a power accumulating device. Among a molding cycle, during a process where an amount of consumed power is small, a DC voltage is supplied to the servo amplifier from the AC/DC converter and a power is accumulated in the power accumulating device. In a process such as an injection process where a large power is required, a high DC voltage is supplied to the servo amplifier from the power accumulating device in place of the AC/DC converter.

JP 2004-154961 A discloses a drive control device of an electromotive injection molding machine having a regenerative function which can avoid the damage of a servo amplifier or a converter even if abrupt regeneration energy is generated without making the device complicated and expensive. In the drive control device of the electromotive injection molding machine, a servo power supply for supplying driving power to an electromotor, a power supply regeneration means which is connected in parallel to the servo power supply and regenerates regeneration energy generated during the deceleration driving of the electromotor toward the power supply side, and a resistance regeneration means are provided, and a sensor for detecting the voltage of the servo power supply is.further provided. When the detection voltage from the sensor reaches a preset first voltage (V1), the power supply regeneration means is actuated and, when the detection voltage reaches a second voltage (V2) higher than the first voltage (V1), the resistance regeneration means is actuated.

JP 2010-110936 A discloses a display method which enables calculation and display of power consumption and regenerative electric power of all the electric injection molding machine including loss electric power in a converter or an inverter. In the electric injection molding machine, the electric power display method has a PWM converter which converts a three-phase AC voltage supplied from a three-phase AC power source side into a DC voltage to supply to servo amplifiers. Servo motors for driving a screw, a mold opening/closing device, and an ejector device or the like by the servo amplifiers are driven, and the regenerative electric power regenerated from the servo amplifiers by the PWM converter is returned to the three-phase AC power source side. The electric power data includes the power consumption and the regenerative electric power of the electric injection molding machine is calculated and displayed from a voltage value and a current value between the three-phase AC power source side and the PWM converter. An electric energy obtained by integrating the electric power data including a reactive electric power and a power factor.

WO 2011/162246 A1 forms part of the prior art under Art. 54 (3) EPC and discloses an injection molding machine, which is provided with a power source regeneration converter connected between an AC power source and an inverter unit, comprising: a power conversion unit that converts in both directions between AC power and DC power; a DC voltage detection unit that detects the DC voltage of a capacitor that is between the inverter unit and the power conversion unit; and an AC current control unit that outputs to the power conversion unit a control signal generated on the basis of the voltage difference between a predetermined voltage and the DC voltage that the DC voltage detection unit detects, and controls the AC current that flows between the AC power source and the power conversion unit.

## SUMMARY OF INVENTION

Therefore, it is an object of the present invention to provide an injection molding machine which can keep desired value of energy in a DC link when necessary without upsizing the converter.

In order to achieve the aforementioned object, according to the present invention, an injection molding machine is provided as set forth in claim 1.

According to the present invention, an injection molding machine can be obtained which can keep a desired value of energy in a DC link when necessary without upsizing the converter.

## BRIEF DESCRIPTION OF DRAWINGS

Fig. 1 is a diagram for illustrating a main configuration of an injection molding machine 1 according to an embodiment of the present invention.
Fig. 2 is a diagram for schematically illustrating an example of a motor driving power supply circuit including a power supply converter 100 in the injection molding machine 1.
Fig. 3 is a diagram for illustrating an example of the circuit configuration of the power supply converter 100.
Fig. 4 is a functional block diagram of the controller 26.
Fig. 5 is a timing chart for illustrating an example of a process sequence of one cycle of injection molding in the injection molding machine 1.
Fig. 6 is a flowchart for illustrating an example of a method of controlling the power supply converter 100 according to the present embodiment.
Fig. 7 is a diagram for illustrating an example of how DC link energy changes according to the process illustrated in Fig. 6.
Fig. 8 is a flowchart for illustrating another example of a method of controlling the power supply converter 100 according to the present embodiment.

## BEST MODE FOR CARRYING OUT THE INVENITON

In the following, the best mode for carrying out the present invention will be described in detail by referring to the accompanying drawings.

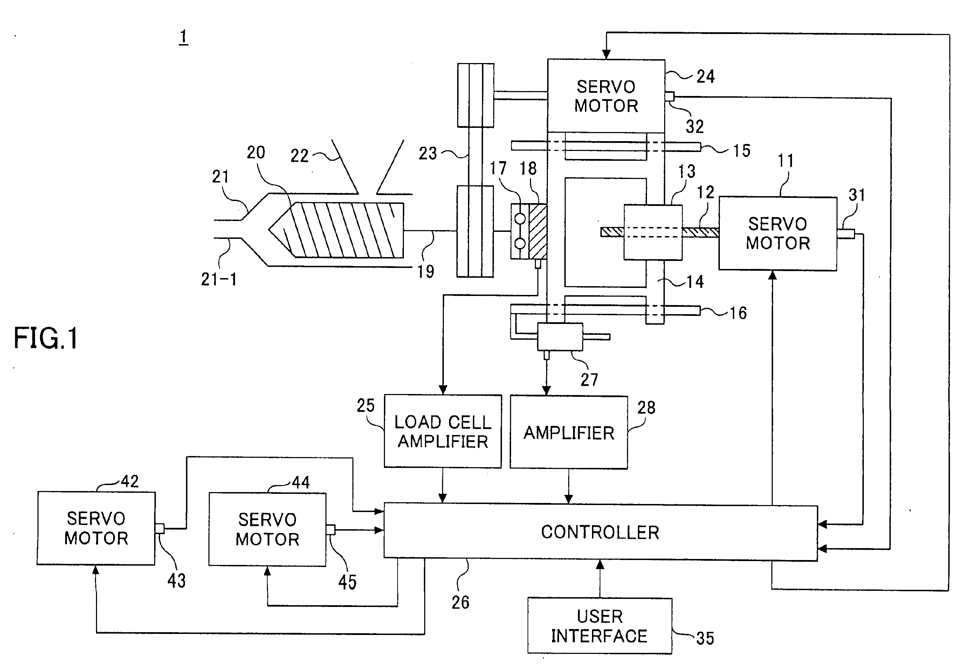

Fig. 1 is a diagram for illustrating a main configuration of an injection molding machine 1 according to an embodiment of the present invention.

The injection molding machine 1, which is a motor-operated injection molding machine in the illustrated example, includes a servo motor for injection 11. The rotation of the servo motor for injection 11 is transmitted to a ball screw 12. A nut 13, which is moved in forward and backward directions by the rotation of the ball screw 12, is fixed to a pressure plate 14. The pressure plate 14 is configured to be movable along guide bars 15 and 16 which are fixed to a base frame (not illustrated). The motion of the pressure plate 14 in forward and backward directions is transmitted to a screw 20 via a bearing 17, a load cell 18 and an injection shaft 19. The screw 20 is disposed in a heating cylinder 21 in such a manner that it can rotate in the heating cylinder 21 and can move in an axial direction. A hopper 22 for supplying a resin is provided in a rear portion in the heating cylinder 21. The rotational motion of a servo motor for screw rotation 24 is transmitted to the injection shaft 19 via coupling members 23 such a belt, a pulley, etc. In other words, the screw 20 is rotated when the injection shaft 19 is driven to rotate by the servo motor for screw rotation 24.

In a plasticizing/metering process, the screw 20 is rotated and moved backward in the heating cylinder 21, thereby molten resin is stored in a front portion of the screw 20, that is to say, on the side of a nozzle 21-1 of the heating cylinder 21. In an injection process, molds (dies) are filled with the molten resin stored in the front portion of the screw 20, and molding is performed by applying pressure. At that time, a force pressing the resin is detected by the load cell 18 as a reaction force. In other words, a resin pressure in the front portion of the screw 20 is detected. The signal representing the detected pressure is amplified by a load cell amplifier 25 and input to a controller 26 (a control apparatus) functioning as controlling means. Further, in a holding process, the pressure of the resin filling in the molds is held at a predetermined pressure.

A position detector 27 for detecting an amount of movement of the screw 20 is attached to the pressure plate 14. The detection signal of the position detector 27 is amplified by an amplifier 28 and input to the controller 26. This detection signal may be used to detect a movement speed of the screw 20.

The servo motors 11 and 24 are provided with encoders 31 and 32 for detecting a number of revolutions, respectively. The number of revolutions detected by the encoders 31 and 32 is input to the controller 26.

A servo motor 42 is provided for opening and closing the molds, and a servo motor 44 is provided for extruding (ejecting) a molded article. The servo motor 42 drives a toggle link (not shown), for example, to implement the mold opening/closing. Further, the servo motor 44 moves an ejector rod (not shown) via a ball screw mechanism, for example, to implement the ejection of the molded article. The servo motor 42 and 44 are provided with encoders 43 and 45 for detecting a number of revolutions, respectively. The numbers of revolutions detected by the encoders 43 and 45 are input to the controller 26.

The controller 26 is comprised mainly of a microprocessor that includes a CPU, a ROM in which control programs are stored, a RAM in which calculation results are stored, a timer, a counter, an input interface, an output interface, etc., for example.

The controller 26 transmits current (torque) instructions to the servo motors 11, 24, 42 and 44 according to the respective processes. For example, the controller 26 controls the number of revolutions of the servo motor 24 to implement the plasticizing/metering process. Further, the controller 26 controls the number of revolutions of the servo motor 11 to implement the injection process and the holding process. Further, the controller 26 controls the number of revolutions of the servo motor 42 to implement the mold opening process and the mold closing process. Further, the controller 26 controls the number of revolutions of the servo motor 44 to implement the molded article ejecting process.

A user interface 35 includes an input setting part with which injection molding conditions can be set for the respective processes, such as a mold opening/closing process, an injection process, etc. Further, the user interface 35 may include an input part with which injection molding conditions can be input for the respective processes, such as a mold opening/closing process, an injection process, etc. Further, the user interface 35 includes an input part with which a user inputs various instructions and an output part (a display part, for example) configured to output various items of information.

Typically, a cycle of the injection molding process in the injection molding machine 1 includes a mold closing process for closing the molds; a mold clamping process for clamping the molds; a nozzle contacting process for abutting a nozzle 21-1 onto a sprue (not shown) of the molds; an injection process for moving the screw 20 in the heating cylinder 21 to inject the molten resin stored in the front portion of the screw 20 into a mold cavity (not shown); a holding process for maintaining the dwell pressure afterward for a while so as to prevent emergence of air bubbles and sink marks; a plasticizing/metering process and a cooling process for melting the resin and storing the molten resin in the front portion of the heating cylinder 21 by rotating the screw 20 so as to prepare for the next cycle, utilizing the time until the molten resin filling in the mold cavity is cooled to set; a mold opening process for opening the molds; and a molded article ejecting process for pushing the molded article out with ejector pins (not shown) provided in the mold.

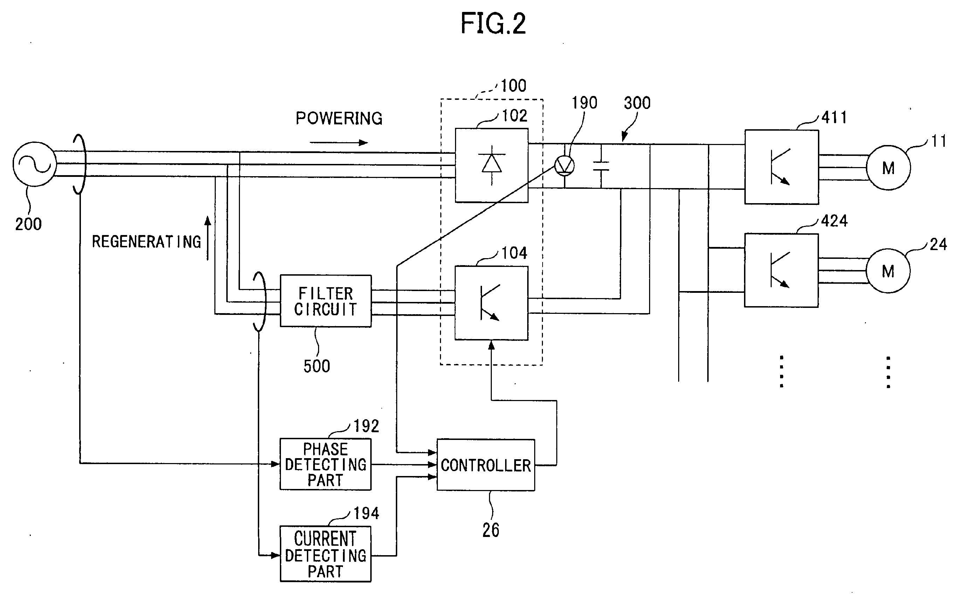

Fig. 2 is a diagram for schematically illustrating an example of a motor driving power supply circuit in the injection molding machine 1.

The power supply converter 100 is connected to a power supply 200. The power supply 200 may be a three-phase AC power supply. Further, the power supply converter 100 is connected to the servo motors 11, 24, 42 and 44 (only the servo motors 11 and 24 are illustrated in Fig. 2) via a DC link 300. The power supply converter 100 converts the electric power from the power supply 200 and supplies the converted electric power to the servo motors 11, 24, 42 and 44 via the DC link 300. The power supply converter 100 is connected to the servo motors 11, 24, 42 and 44 via the DC link 300 and inverters. The inverter converts an output (DC electric power) of the power supply converter 100 to the three-phase AC electric power. The inverter may be a three-phase bridge circuit which includes six power transistors and six diodes connected to the corresponding transistor with inverse-parallel connections, for example. The inverters are provided one by one for the servo motors 11, 24, 42 and 44. In Fig. 2, only the inverters 411 and 424 for the servo motors 11 and 24 are illustrated. The DC link 300 is comprised of a condenser (a capacitor), a bus bar, a cable, or the like.

A voltage detecting part 190 is provided to detect a voltage across the DC link 300. A value of the voltage detected by the voltage detecting part 190 is supplied to the controller 26. A phase detecting part 192 detects a phase of a current from the power supply 200. A current detecting part 194 detects the current passing through a power supply line branched from the power supply 200 to a filter circuit 500.

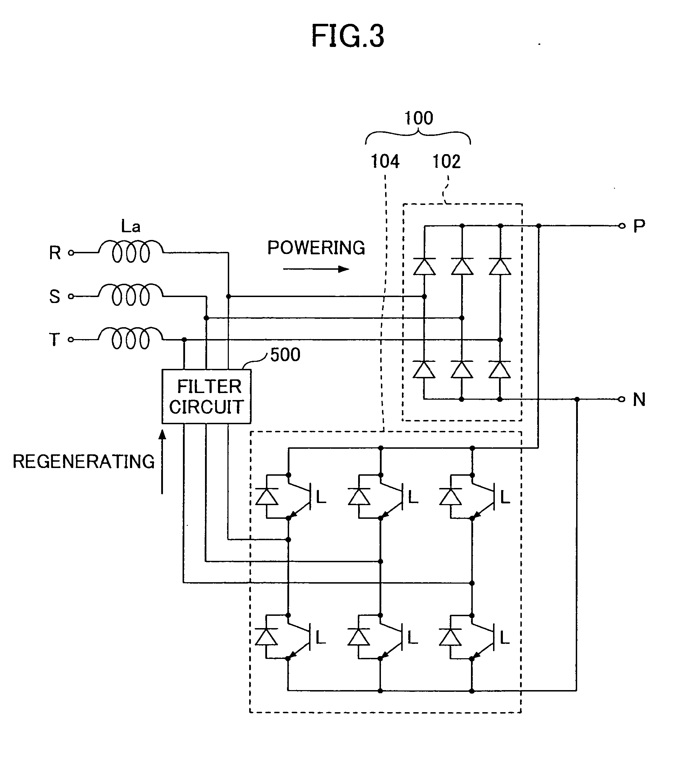

Fig. 3 is a diagram for illustrating an example of the circuit configuration of the power supply converter 100. In the example illustrated in Fig. 3, the power supply converter 100 includes terminals R, S and T which are connected to the AC power supply and terminals P and N which are connected to the DC link 300. The power supply converter 100 includes a rectifier (a first electric power converting part) 102 which includes six diodes; and a bridge circuit (a second electric power converting part) 104 which includes six power transistors and six diodes which are connected to the corresponding transistors with inverse-parallel connections. The second electric power converting part 104 is connected to the power supply 200 via the filter circuit 500. It is noted that in Fig. 3 a flow of the electric power at the time of a powering mode and a flow of the electric power at the time of a regenerating mode are indicated by arrows.

The first electric power converting part 102 converts the electric power from the power supply 200 to function such that the voltage across the DC link 300 does not fall below a predetermined lower limit voltage $V_{MIN}$.

The second electric power converting part 104 drives the power transistors in synchronization with the phase of the power supply 200, based on detection results of the phase detecting part 192 and the current detecting part 194, to generate the regenerative electric power to be charged in the power supply at the time of a motor regenerating mode. At the time of a motor powering mode, since the electric power is supplied to the servo motors 11, 24, 42 and 44 from the first electric power converting part 102, the second electric power converting part 104 does not operate basically except for a predetermined case. In the case of operating at the time of a motor powering mode, the second electric power converting part 104 drives the power transistors to convert the electric power from the power supply 200 and output the converted electric power to the side of the DC link 300.

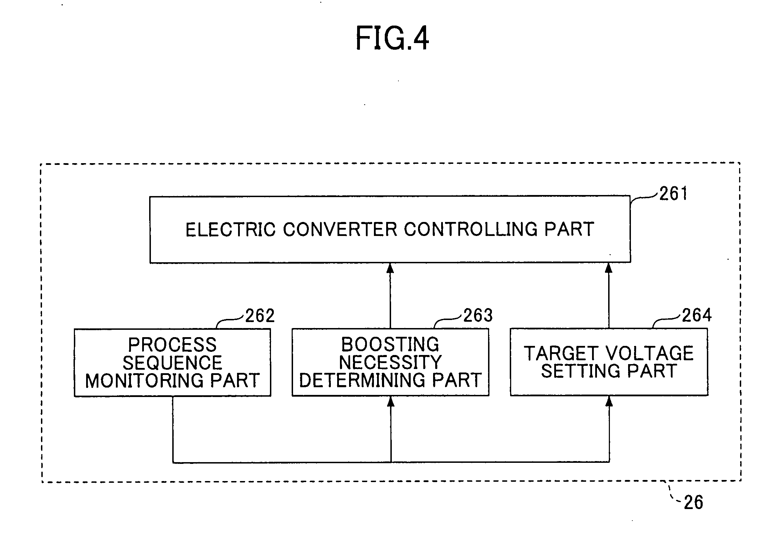

Fig. 4 is a functional block diagram of the controller 26 which functions as a control apparatus of the power supply converter 100. It is noted that the control apparatus of the power supply converter 100 may be implemented by a control apparatus other than the controller 26.

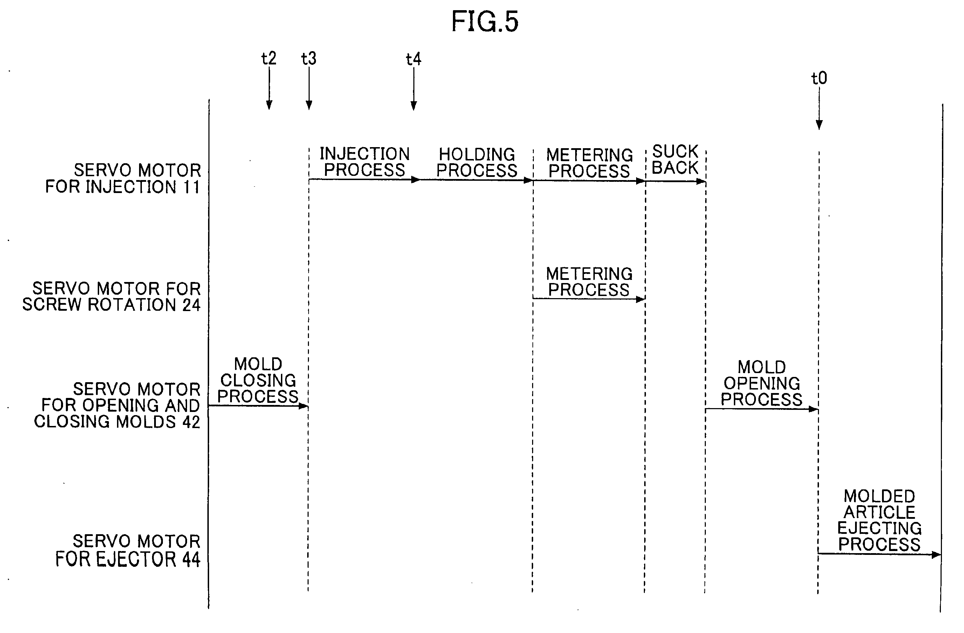

The controller 26 includes an electric converter controlling part 261, a process sequence monitoring part 262, a boosting necessity determining part 263 and a target voltage setting part 264. The controller 26 includes one or more calculation processing apparatuses and a storage device for storing software (programs) and data, etc., such as a RAM and a ROM. The respective functional parts 261, 262, 263 and 264 of the controller 26 are functional parts for performing various processes for input data, using the calculation processing apparatus mainly, and are implemented by a hardware resource, a software resource or a combination thereof. The functions of the respective functional parts 261, 262, 263 and 264 are described with reference to Fig. 5, etc.

Fig. 5 is a timing chart for illustrating an example of a process sequence of one cycle of injection molding in the injection molding machine 1. The arrows in Fig. 5 indicate that the corresponding servo motors 11, 24, 42 and 44 are driving. The process sequence monitoring part 262 monitors start timing and end timing of the respective processes based on a process sequence thus set in advance.

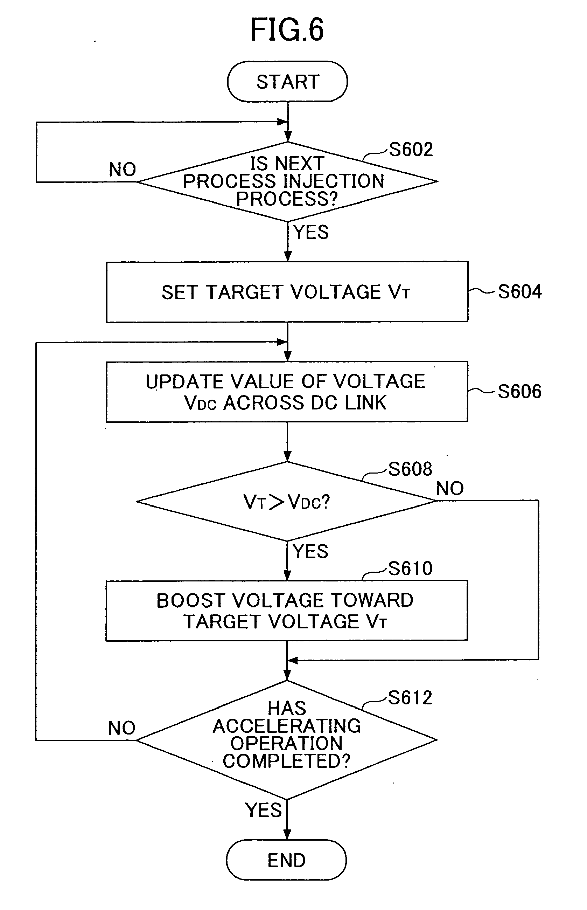

Fig. 6 is a flowchart for illustrating an example of a method of controlling the power supply converter 100 according to the present embodiment. The control process illustrated in Fig. 6 is executed by the controller 26. A process routine illustrated in Fig. 6 may be executed continuously and repeatedly during the execution of the injection molding process.

In step 602, the process sequence monitoring part 262 determines whether the next process is the injection process. Then, the process sequence monitoring part 262 may determine whether the injection process will start within a predetermined time $\Delta T$. If it is determined that the next process is the injection process, the process routine goes to step 604. Otherwise, the process routine of this process period terminates and waits for the next process period.

In step 604, the target voltage setting part 264 sets a target voltage $V_T$ with respect to the voltage across the DC link 300. It is noted that a relationship between the voltage $V_{DC}$ across the DC link 300 and DC link energy E is expressed by a following equation.

$$E = (1/2) \times C \times V_{DC}{}^2$$

Here, the DC link energy E corresponds to energy accumulated in the DC link 300. The target voltage $V_T$ may be a design value set in advance. For example, the target voltage $V_T$ may be set based on maximum energy (maximum DC link energy) which can be accumulated in the DC link 300. In this case, the maximum DC link energy may have a predetermined margin with respect to energy limit for using the DC link 300 safely. Alternatively, the target voltage $V_T$ may be set based on energy to be used (electric power to be consumed by the corresponding servo motors 11, 24, 42 and 44) at the powering operation in the next process. Further, the target voltage $V_T$ may be set to an appropriate value by a user via a user interface 35, for example.

In step 606, the boosting necessity determining part 263 updates the current value of the voltage $V_{DC}$ across the DC link 300 based on the latest detection result of the voltage detecting part 190.

In step 608, the boosting necessity determining part 263 determines whether the current value of the voltage $V_{DC}$ across the DC link 300 obtained in step 606 is less than the target voltage $V_T$ set in step 604. If the current value of the voltage $V_{DC}$ across the DC link 300 obtained in step 606 is less than the target voltage $V_T$ set in step 604, the process routine goes to step 610. If the current value of the voltage $V_{DC}$ across the DC link 300 is greater than or equal to the target voltage $V_T$, the process routine goes to step 612.

In step 610, the electric converter controlling part 261 controls the output of the power supply converter 100 such that the voltage $V_{DC}$ across the DC link 300 becomes the target voltage $V_T$ set in step 604. The electric converter controlling part 261 controls the output of the second electric power converting part 104 (the output in the forward direction in which the electric converter controlling part 261 converts electric power from the power supply 200 and outputs the converted electric power to the side of the DC link 300) by driving the power transistors of the second electric power converting part 104 such that the voltage $V_{DC}$ across the DC link 300 becomes the target voltage $V_T$ set in step 604. It is noted that the output of the electric converter controlling part 261 may be controlled by adjusting switching times (duties) of the respective power transistors.

In step 612, the boosting necessity determining part 263 determines whether an accelerating operation of the screw 20 in the injection process has finished. This determination may be implemented based on set speeds (control pattern) of the servo motor 11. Alternatively, this determination may be implemented based on detected values of the position detector 27 for detecting the amount of movement of the screw 20 or a time derivative value thereof. If it is determined that the accelerating operation of the screw 20 in the injection process has finished, the process routine ends as it is. On the other hand, if it is determined that the accelerating operation of the screw 20 in the injection process has not finished, the process routine repeats from the process of step 606.

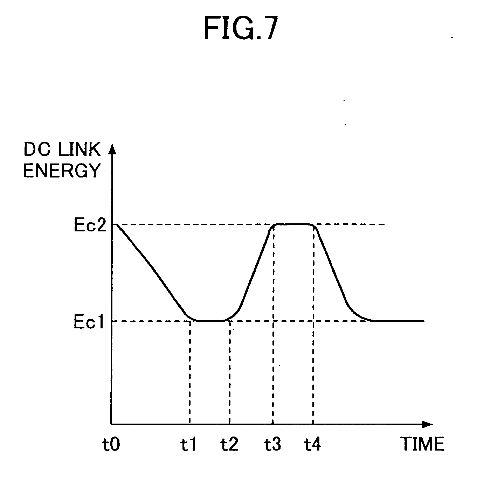

Fig. 7 is a diagram for illustrating an example of how DC link energy changes according to the process illustrated in Fig. 6. In Fig. 7, the DC link energy corresponding to the target voltage $V_T$ is indicated by $EC2(=(1/2) \times C \times V_T^2)$, and the DC link energy corresponding to the lower limit voltage $V_{MIN}$ is indicated by $EC1(=(1/2) \times C \times V_{MIN}^2)$. Further, the time points corresponding to t0, t2, t3 and t4 in Fig. 7 are also indicated in the process sequence diagram illustrated in Fig. 5.

In the example illustrated in Fig. 7, if it is assumed that the time point t0 corresponds to the end timing of the mold opening process, for example, the DC link energy, which is increased by regenerative energy in the mold opening process, then decreases gradually due to the powering operation of the servo motor 44 before the mold closing process, and at the time point t1 in the mold closing process, the DC link energy has decreased to EC1 corresponding to the lower limit voltage $V_{MIN}$ due to the powering operation of the servo motor 42. It is noted that during this period, the powering operations of the servo motors 44 and 42 are enabled by the DC link energy. After that, until the time point t2 before the starting of the injection molding, the powering operation of the servo motor 42 is enabled by converting the electric power from the power supply 200 with the first electric power converting part 102. In other words, the first electric power converting part 102 converts the electric power from the power supply 200 to keep the voltage across the DC link 300 at the lower limit voltage $V_{MIN}$. At the time point t2 before the starting of the injection molding, the determination result in step 602 illustrated in Fig. 6 becomes affirmative, and thus the processes from step 604 are executed. As a result of the boosting operation in step 610 illustrated in Fig. 6, the DC link energy is increased toward EC2 corresponding to the target voltage $V_T$. In the example illustrated in Fig. 7, at the time point t3 corresponding to the timing of starting the injection molding, the DC link energy has reached EC2 corresponding to the target voltage $V_T$. When the injection process is started from the time point t3, the servo motor 11 performs the powering operation to accelerate the screw 20. This powering operation is enabled by the DC link energy EC2 corresponding to the target voltage $V_T$ and the energy converted by the second electric power converting part 104 based on the electric power from the power supply 200. At the time point t4, the accelerating operation of the screw 20 in the injection process has completed and thus the boosting operation of the second electric power converting part 104 is stopped. After that, the DC link energy decreases with the powering operations of the servo motors 11, etc.

Here, an operation which requires a relatively large amount of electric power, such as the accelerating operation of the screw 20, cannot be implemented in a desired manner if the voltage across the DC link 300 is low (if the voltage across the DC link 300 is the lower limit voltage $V_{MIN}$, for example). In this connection, it is also possible to set the increased lower limit voltage $V_{MIN}$ in the first electric power converting part 102; however, such a configuration may lead to upsizing of the power supply converter 100.

To the contrary, according to the present embodiment, as described above, if the operation which requires a relatively large amount of electric power is predicted, the second electric power converting part 104 is controlled in advance to boost the voltage across the DC link 300 toward the target voltage $V_T$. Therefore, according to the present embodiment, even if one cycle of the injection molding process includes an operation which requires a relatively large amount of electric power, it is possible to implement such an operation in a desired manner.

Further, such an operation which requires a relatively large amount of electric power over a relatively long time, such as the accelerating operation of the screw 20, cannot be implemented in a desired manner after the time point when the DC link energy is reduced due to the operation, even if the DC link energy is sufficiently high at the time of starting the operation. To the contrary, according to the present embodiment, the powering operation of the servo motor 11 for implementing the accelerating operation of the screw 20 is performed in a status in which the voltage across the DC link 300 is controlled to follow the target voltage $V_T$. Therefore, according to the present embodiment, the voltage across the DC link 300 is prevented from being reduced during the accelerating operation of the screw 20, and thus it is possible to implement the accelerating operation of the screw 20 in a desired manner over the whole of its operation period.

It is noted that in the example illustrated in Fig. 6 the accelerating operation of the screw 20 in the injection process is described as an example of timing of performing the boost operation of the second electric power converting part 104; however, it is possible to perform substantially the same boost operation of the second electric power converting part 104 for an arbitrary operation in an arbitrary process. At that time, if the target operation requires a relatively large amount of electric power over a relatively short time, the boost operation of the second electric power converting part 104 may be performed such that the voltage across the DC link 300 has reached the target voltage $V_T$ before the starting timing of the target operation and the boost operation may be stopped during the target operation. Then, the target voltage $V_T$ may be changed according to the electric power required by the target operation (see step 604 in Fig. 6).

According to the present embodiment, since the second electric power converting part 104, which is used for regeneration to the power supply 200, is operated to boost the voltage during the limited particular time period, it is possible to keep the DC link energy at a desired value when necessary without upsizing the power supply converter 100.

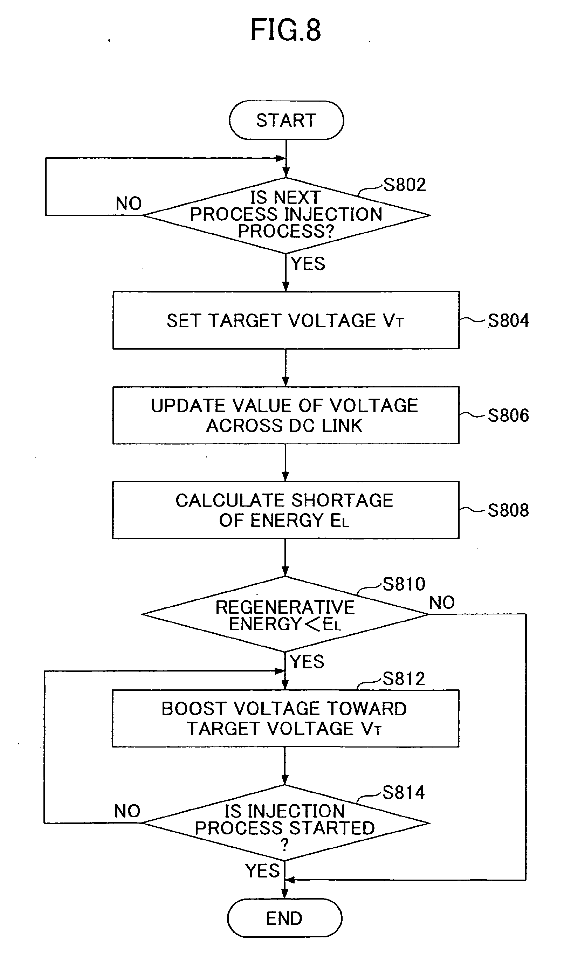

Fig. 8 is a flowchart for illustrating another example of a method of controlling the power supply converter 100 according to the present embodiment. The control process illustrated in Fig. 8 is executed by the controller 26. A process routine illustrated in Fig. 8 may be executed continuously and repeatedly during the execution of the injection molding process.

The processes of step 802 through 806 may be the same as step 602 through 606 illustrated in Fig. 6, respectively.

In step 808, the necessity determining part 263 calculates a shortage of the energy $E_L$ by calculating difference between the DC link energy corresponding to the target voltage $V_T$ set in step 804 and the DC link energy corresponding to the current value of the voltage $V_{DC}$ across the DC link 300 obtained in step 806.

In step 810, the boosting necessity determining part 263 compares the regenerative energy which is predicted to be generated in the preceding process (in this example, the process which is currently performed and preceding the injection process) with the shortage of the energy $E_L$ to determine whether the shortage of the energy $E_L$ is greater than the regenerative energy. With respect to the regenerative energy which is predicted to be generated in the preceding process, a value obtained in advance based on experiments, etc., may be used. If it is determined that the shortage of the energy $E_L$ is greater than the regenerative energy, the process routine goes to step 812. On the other hand, if it is determined that the regenerative energy is greater than or equal to the shortage of the energy $E_L$, the process routine ends as it is, concluding that the boosting operation of the second electric power converting part 104 is not necessary. However, also in this case, in order to prevent problems due to the reduction in the DC link energy after the starting of the operation, the processes 606 through 612 (feedback process) illustrated in Fig. 6 may be performed.

In step 812, the electric converter controlling part 261 controls the output of the power supply converter 100 such that the voltage $V_{DC}$ across the DC link 300 becomes the target voltage $V_T$ set in step 604.

In step 814, the process sequence monitoring part 262 determines whether the injection process is started. If the injection process is started, the process routine ends as it is. On the other hand, if the injection process is not started, the process routine returns to step 812. In this way, until the injection process is started, the output of the power supply converter 100 is controlled such that the voltage $V_{DC}$ across the DC link 300 becomes the target voltage $V_T$ set in step 804. It is noted that if the voltage $V_{DC}$ across the DC link 300 becomes the target voltage $V_T$ before the injection process is started, the process routine may end as it is. It is noted that after the injection process is started, the processes 606 through 612 (feedback process) illustrated in Fig. 6 may be performed.

In this way, according to the process illustrated in Fig. 8, since whether the boosting operation of the second electric power converting part 104 is performed is determined according to the magnitude of the regenerative energy in the previous process, the boosting operation of the second electric power converting part 104 can be performed only if necessary according to the magnitude of the regenerative energy in the previous process.

It is noted that in the example illustrated in Fig. 8 the accelerating operation of the screw 20 in the injection process is described as an example of timing of determining a need to perform the boost operation of the second electric power converting part 104; however, it is possible to perform substantially the same determination for an arbitrary operation in an arbitrary process.

The present invention is disclosed with reference to the preferred embodiments. However, it should be understood that the present invention is not limited to the above-described embodiments, and variations and modifications may be made without departing from the scope of the present invention as defined in the appended claims.

For example, according to the embodiment, plural servo motors 11, 24, 42 and 44 are connected to a single power supply converter 100 via the DC link 300; however, any number of the servo motors including one servo motor may be connected to the power supply converter 100 via the DC link 300.

Further, according to the present embodiment, a voltage as a dimension of a physical quantity is used for control; however, substantially the same control can be performed by equivalently using other dimensions of a physical quantity such as energy.

## Claims

1.  An injection molding machine (1), comprising:

    a converter (100) configured to convert electric power from a power supply (200) and supply the converted electric power to a motor (11, 24) via a DC link (300); and
    a control apparatus (26) configured to control the converter (100) for molding at a predetermined molding cycle, wherein
    the converter (100) is capable of operating in a forward direction to output the converted electric power to the DC link (300), and in a backward direction to output a converted regenerative electric power of the motor (11, 24) to the power supply (200),
    the control apparatus is adapted to instruct the converter (100) to operate in the forward direction in a predetermined time period in the molding cycle such that a voltage of the DC link (300) becomes a predetermined target voltage,
    **characterized in that**
    the converter (100) includes a first electric power converting part (102) and a second electric power converting part (104) connected in parallel between the power supply (200) and the motor (11, 24), the first electric power converting part (102) configured to convert the electric power from the power supply (200) and output the converted electric power to the DC link (300),

the second electric power converting part (104) is capable of operating in the forward direction to output the converted electric power to the DC link (300), and in the backward direction to output a converted regenerative electric power of the motor (11, 24) to the power supply (200), and the control apparatus (26) is adapted to instruct the second electric power converting part (104) to operate in the forward direction in a predetermined time period in the molding cycle such that a voltage of the DC link (300) becomes the predetermined voltage.

2. The injection molding machine of claim 1, wherein the first electric power converting part (102) includes a diode bridge circuit which is adapted to convert the electric power from the power supply (200) to prevent the voltage of the DC link (300) from falling below a predetermined lower limit voltage, and the predetermined target voltage is greater than the predetermined lower limit voltage.

3. The injection molding machine of claim 1 or 2, wherein the control apparatus (26) is adapted to instruct the second electric power converting part (104) to operate in the forward direction continuously such that the voltage of the DC link (300) becomes the predetermined target voltage until the time of starting a predetermined process in the molding cycle and the voltage of the DC link (300) keeps the predetermined target voltage after the time of starting the predetermined process.

**Patentansprüche**

1. Spritzgussmaschine (1), die Folgendes aufweist:

einen Konverter (100), der konfiguriert ist, um elektrische Leistung von einer Leistungsversorgung (200) umzuwandeln, und um die umgewandelte elektrische Leistung an einen Motor (11, 24) über eine Gleichstromverbindung (300) zu liefern; und
eine Steuervorrichtung (26), die konfiguriert ist, um den Konverter (100) zum Formen mit einem vorbestimmten Formzyklus zu steuern, wobei der Konverter (100) imstande ist, in einer Vorwärtsrichtung zu arbeiten, um den umgewandelten, elektrischen Strom an die Gleichstromverbindung (300) auszugeben, sowie in einer Rückwärtsrichtung, um eine umgewandelte, regenerierte, elektrische Leistung des Motors (11, 24) an die Stromversorgung (200) auszugeben, die Steuervorrichtung ausgelegt ist, um den Konverter (100) anzuweisen, in einer vorbestimmten Zeitperiode in dem Formzyklus in der Vorwärtsrichtung zu arbeiten, so dass eine Spannung der Gleichstromverbindung (300) eine vorbestimmte Zielspannung wird,
**dadurch gekennzeichnet, dass**
der Konverter (100) einen ersten Umwandlungsteil (102) der elektrischen Leistung und einen zweiten Umwandlungsteil (104) der elektrischen Leistung aufweist, die parallel zwischen der Stromversorgung (200) und dem Motor (11, 24) eingebunden sind, wobei der erste Umwandlungsteil (102) der elektrischen Leistung so konfiguriert ist, dass er die elektrische Leistung von der Stromversorgung (200) umwandelt und die umgewandelte elektrische Leistung an die Gleichstromverbindung (300) ausgibt,
der zweite Umwandlungsteil (104) der elektrischen Leistung imstande ist, in der Vorwärtsrichtung zu arbeiten, um die umgewandelte elektrische Leistung an die Gleichstromverbindung (300) auszugeben, und in der Rückwärtsrichtung, um eine umgewandelte, regenerierte, elektrische Leistung des Motors (11, 24) an die Stromversorgung (200) auszugeben, und die Steuervorrichtung (26) ausgelegt ist, um den zweiten Umwandlungsteil (104) der elektrischen Leistung anzuweisen, in der Vorwärtsrichtung in einer vorbestimmten Zeitperiode in dem Formzyklus zu arbeiten, so dass eine Spannung der Gleichstromverbindung (300) die vorbestimmte Spannung wird.

2. Spritzgussmaschine gemäß Anspruch 1, wobei der erste Umwandlungsteil (102) der elektrischen Leistung eine Diodenbrückenschaltung aufweist, die ausgelegt ist, um die elektrische Leistung von der Stromversorgung (200) umzuwandeln, um zu verhindern, dass die Spannung der Gleichstromverbindung (300) unter eine vorbestimmte untere Grenzspannung fällt, und die vorbestimmte Zielspannung größer als die vorbestimmte untere Grenzspannung ist.

3. Spritzgussmaschine gemäß Anspruch 1 oder 2, wobei die Steuervorrichtung (26) ausgelegt ist, um den zweiten Umwandlungsteil (104) der elektrischen Leistung anzuweisen, kontinuierlich in der Vorwärtsrichtung zu arbeiten, so dass die Spannung der Gleichstromverbindung (300) die vorbestimmte Zielspannung wird, und zwar bis zum Zeitpunkt des Startens eines vorbestimmten Prozesses in dem Formzyklus, und die Spannung der Gleichstromverbindung (300) die vorbestimmte Zielspannung nach dem Zeitpunkt des Startens des vorbestimmten Prozesses hält.

**Revendications**

1. Machine de moulage par injection (1), comprenant :

   un convertisseur (100) agencé pour convertir de l'énergie électrique à partir d'une alimentation (200) et fournir l'énergie électrique convertie à un moteur (11, 24) par l'intermédiaire d'une liaison en courant continu, DC, (300) ; et
   un appareil de commande (26) agencé pour commander le convertisseur (100) pour mouler avec un cycle de moulage prédéterminé, dans lequel
   le convertisseur (100) est capable de fonctionner dans une direction avant pour fournir l'énergie électrique convertie à la liaison DC (300), et dans une direction arrière pour fournir de l'énergie électrique régénérative du moteur convertie (11, 24) à l'alimentation (200),
   l'appareil de commande étant adapté à donner instruction au convertisseur (100) de fonctionner dans la direction avant dans une période temporelle prédéterminée dans le cycle de moulage de telle sorte qu'une tension de la liaison DC (300) devienne une tension cible prédéterminée,
   **caractérisé en ce que**
   le convertisseur (100) comprend une première partie de conversion d'énergie électrique (102) et une deuxième partie de conversion d'énergie électrique (104) connectées en parallèle entre l'alimentation (200) et le moteur (11, 24), la première partie de conversion d'énergie électrique (102) étant agencée pour convertir de l'énergie électrique à partir de l'alimentation (200) et fournir l'énergie électrique convertie à la liaison DC (300),
   la deuxième partie de conversion d'énergie électrique (104) est capable de fonctionner dans la direction avant pour fournir l'énergie électrique convertie à la liaison DC (300), et dans la direction arrière pour fournir de l'énergie électrique régénérative du moteur convertie (11, 24) à l'alimentation (200), et l'appareil de commande (26) est adapté à donner instruction à la deuxième partie de conversion d'énergie électrique (104) de fonctionner dans la direction avant dans une période temporelle prédéterminée dans le cycle de moulage de telle sorte qu'une tension de la liaison DC (300) devienne la tension prédéterminée.

2. Machine de moulage par injection selon la revendication 1, dans laquelle la première partie de conversion d'énergie électrique (102) comprend un circuit à pont de diodes qui est adapté à convertir l'énergie électrique provenant de l'alimentation (200) pour empêcher que la tension de la liaison DC (300) descende en dessous d'une tension limite inférieure prédéterminée, et
la tension cible prédéterminée est supérieure à la tension limite inférieure prédéterminée.

3. Machine de moulage par injection selon la revendication 1 ou 2, dans laquelle l'appareil de commande (26) est adapté à donner instruction à la deuxième partie de conversion d'énergie électrique (104) de fonctionner continument dans la direction avant de telle sorte que la tension de la liaison DC (300) deviennent la tension cible prédéterminée jusqu'à l'instant de démarrage d'un processus prédéterminé dans le cycle de moulage et que la tension de la liaison DC (300) maintienne la tension cible prédéterminée après l'instant de démarrage du processus prédéterminé.

FIG.1

1

SERVO MOTOR — 24

32

15

20  22

21  23  17  18  13  12  11

SERVO MOTOR  31

21-1  19  14

16

27

25  LOAD CELL AMPLIFIER  AMPLIFIER — 28

42  44

SERVO MOTOR  SERVO MOTOR  CONTROLLER

43  45  26

USER INTERFACE — 35

EP 2 522 481 B1

10

## FIG.2

# FIG.3

# FIG.4

ELECTRIC CONVERTER CONTROLLING PART ~261

PROCESS SEQUENCE MONITORING PART ~262

BOOSTING NECESSITY DETERMINING PART ~263

TARGET VOLTAGE SETTING PART ~264

~26

EP 2 522 481 B1

# FIG.5

SERVO MOTOR FOR INJECTION 11 — INJECTION PROCESS | HOLDING PROCESS | METERING PROCESS | SUCK BACK

SERVO MOTOR FOR SCREW ROTATION 24 — METERING PROCESS

SERVO MOTOR FOR OPENING AND CLOSING MOLDS 42 — MOLD CLOSING PROCESS | MOLD OPENING PROCESS

SERVO MOTOR FOR EJECTOR 44 — MOLDED ARTICLE EJECTING PROCESS

t2  t3  t4  t0

EP 2 522 481 B1

# FIG.6

```
                    START

                      │
                      ▼
         ┌────────────────────────┐        S602
    NO   │      IS NEXT           │
  ┌──────│  PROCESS INJECTION     │
  │      │      PROCESS?          │
  │      └────────────────────────┘
  │                   │ YES
  │                   ▼
  │      ┌────────────────────────┐       S604
  │      │  SET TARGET VOLTAGE Vt │
  │      └────────────────────────┘
  │                   │
  │                   ▼
  │      ┌────────────────────────┐       S606
  │      │ UPDATE VALUE OF VOLTAGE│
  │      │  Vdc ACROSS DC LINK    │
  │      └────────────────────────┘
  │                   │
  │                   ▼                    S608
  │         ┌──────────────────┐      NO
  │         │     Vt > Vdc ?    │──────┐
  │         └──────────────────┘       │
  │                   │ YES            │
  │                   ▼        S610     │
  │      ┌────────────────────────┐    │
  │      │ BOOST VOLTAGE TOWARD   │    │
  │      │  TARGET VOLTAGE Vt     │    │
  │      └────────────────────────┘    │
  │                   │◄───────────────┘
  │                   ▼                    S612
  │         ┌──────────────────┐
  │   NO    │      HAS         │
  └─────────│  ACCELERATING    │
            │  OPERATION       │
            │  COMPLETED?      │
            └──────────────────┘
                      │ YES
                      ▼
                    END
```

$V_T > V_{DC}?$

# FIG.7

# FIG.8

```
                    ┌─────────────┐
                    │    START    │
                    └──────┬──────┘
                           │
          ┌────────────────┤
          │                ▼
          │         ╱───────────────╲        S802
          │  NO    ╱   IS NEXT        ╲
          └───────╱ PROCESS INJECTION  ╲
                  ╲    PROCESS?        ╱
                   ╲─────────┬────────╱
                             │ YES
                             ▼
                 ┌───────────────────────┐
                 │  SET TARGET VOLTAGE Vᴛ │──── S804
                 └───────────┬───────────┘
                             │
                             ▼
                 ┌───────────────────────┐
                 │  UPDATE VALUE OF       │
                 │  VOLTAGE ACROSS DC LINK│──── S806
                 └───────────┬───────────┘
                             │
                             ▼
                 ┌───────────────────────┐
                 │  CALCULATE SHORTAGE    │
                 │  OF ENERGY Eʟ          │──── S808
                 └───────────┬───────────┘
                             │
                             ▼
                      ╱───────────────╲   S810
                     ╱  REGENERATIVE    ╲  NO
                     ╲  ENERGY < Eʟ     ╱────────┐
                      ╲───────┬────────╱         │
                             │ YES               │
          ┌──────────────────┤                   │
          │                  ▼                   │
          │      ┌───────────────────────┐  S812 │
          │      │  BOOST VOLTAGE TOWARD  │       │
          │      │  TARGET VOLTAGE Vᴛ     │       │
          │      └───────────┬───────────┘       │
          │                  │                   │
          │                  ▼                   │
          │ NO        ╱───────────────╲   S814   │
          └──────────╱  IS INJECTION    ╲        │
                     ╲ PROCESS STARTED  ╱        │
                      ╲       ?        ╱         │
                       ╲──────┬───────╱          │
                              │ YES              │
                              ▼◄─────────────────┘
                    ┌─────────────┐
                    │     END     │
                    └─────────────┘
```

**REFERENCES CITED IN THE DESCRIPTION**

**Patent documents cited in the description**

- JP 2006054947 A
- DE 10152198 A1
- EP 2106015 A2
- JP 2004154961 A
- JP 2010110936 A
- WO 2011162246 A1